Europäisches Patentamt

European Patent Office

Office européen des brevets

(19)

(11) Veröffentlichungsnummer: **0 291 897 B1**

# (12) EUROPÄISCHE PATENTSCHRIFT

(45) Veröffentlichungstag der Patentschrift: **22.01.92**

(51) Int. Cl.⁵: **B42D 15/08**, B42D 15/04, B65D 27/30

(21) Anmeldenummer: **88107789.5**

(22) Anmeldetag: **14.05.88**

(54) **Zwei- oder mehrlagiges Papiererzeugnis.**

(30) Priorität: **19.05.87 DE 3716716**
**05.05.88 DE 3815267**

(43) Veröffentlichungstag der Anmeldung:
**23.11.88 Patentblatt 88/47**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
CH-A- 150 628          CH-A- 333 188
DE-C- 92 355           DE-C- 3 508 114
GB-A- 442 972          US-A- 4 566 627

(73) Patentinhaber: **DRESCHER GESCHÄFTSDRUK-
KE GMBH**

**W-7255 Rutesheim(DE)**

(72) Erfinder: **Der Erfinder hat auf seine Nennung
verzichtet**

(74) Vertreter: **Haecker, Walter et al
Patentanwaltskanzlei Hoeger, Stellrecht &
Partner Uhlandstrasse 14c
W-7000 Stuttgart 1(DE)**

EP 0 291 897 B1

**Beschreibung**

Die Erfindung betrifft ein zwei- oder mehrlagiges, mit einer thermoplastifizierbaren Beschichtung versehenes Papiererzeugnis, insbesondere auf der inneren Beschichtungsseite beschrifteter Einblattbrief, Faltblatt, Formular oder dergleichen, das an mindestens einem beispielsweise am Blattrand vorgesehenen Schließbereich verschlossen ist.

Papiererzeugnisse dieser Art sind aus der DE-C 35 08 114 bekannt. Sie sind mit einem Schmelzkleber versehen, der als thermoplastische Beschichtung auf der gesamten Fläche des Papierblatts oder auf bestimmten Klebezonen gleichmäßig und fein verteilt aufgetragen sein kann. Das Papier kann auf der beschichteten Seite von Hand oder maschinell beschriftet sein. Nach der Beschriftung können die Papierlagen, beispielsweise eines gefalteten Einblattbriefes, am Schließbereich, vorzugsweise am Blattrand, unter Anwendung von Temperatur und leichtem Druck verbunden werden. Hierbei wird bemängelt, daß die Verbindung der Papierlagen im Schließbereich insofern unzulänglich ist, da die Lagen des Papiers im wesentlichen nur durch Verklebung der thermoplastischen Beschichtung zusammengehalten werden. Eine derartige Verbindung kann bei vorsichtiger und geschickter Manipulation geöffnet und nach Kenntnisnahme der innenseitigen Beschriftung wieder geschlossen werden, ohne daß ein derart unbefugtes Öffnen und Schließen nachträglich gemerkt oder nachgewiesen werden kann, so daß ein Schutz der auf der beschichteten Innenseite des Papiers befindlichen Daten nicht gewährleistet ist.

Aus der US-A 4 566 627 ist ein Umschlag mit einem Schließbereich bekannt, welcher bei einer der überlappenden Papierlagen einen Bereich umfaßt, in dem in regelmäßiger Anordnung Schnitte eingebracht sind. Beim Versuch, den Umschlag zu öffnen, zerreißt die eine Papierlage an den Schnittstellen. Beim erneuten Schließen bleiben die Reißspuren sichtbar erhalten.

Da auch bei der US-A 4 566 627 eine konventionelle Verklebung des Schließbereichs vorgenommen wird, kann sie wie auch bei den Papiererzeugnissen der DE-C 3 508 114 bei entsprechend vorsichtigem Manipulieren des Schließbereichs, ohne sichtbare Spuren zu hinterlassen, geöffnet und wieder verschlossen werden.

Die Aufgabe der Erfindung besteht darin, ein Papiererzeugnis mit den Merkmalen des Oberbegriffs des Anspruchs 1 dahingehend weiterzubilden, daß ein sicherer Verschluß der Papierlagen erzielt wird, der einen unbefugten Öffnungsversuch auch nachträglich ohne weiteres deutlich erkennen läßt.

Diese Aufgabe wird erfindungsgemäß durch die kennzeichnenden Merkmale des Anspruchs 1 gelöst.

Bevorzugte Ausgestaltungen und Weiterbildungen sowie weitere Vorteile und wesentliche Einzelheiten der Erfindung sind den Merkmalen der Unteransprüche, der nachfolgenden Beschreibung und der Zeichnung zu entnehmen, die in schematischer Darstellung bevorzugte Ausführungsformen als Beispiel zeigt. Es stellen dar:

FIG. 1    ein erfindungsgemäßes Papiererzeugnis in isometrischer Darstellung,

FIG. 2    einen Teil des Papiererzeugnisses gemäß dem Schnitt II - II der FIG. 1 und

FIG. 3    das Papiererzeugnis gemäß FIG. 1, jedoch mit einem durch unbefugte Manipulation ausgefransten Verschlußrand.

Das in der Zeichnung dargestellte erfindungsgemäße Papiererzeugnis 1 ist bevorzugt als sogenannter Einblattbrief ausgebildet, der rechteckförmig ausgeführt und in der Mitte gefaltet sein kann, so daß eine obere Papierlage 2 und eine untere Papierlage 3 flächig aufeinander liegen, die an der einen Längsseite von dem Papierfaltrand 4 begrenzt sind. Die anderen drei Seitenränder 5,6,7 des doppellagigen Einblattbriefes 1 weisen einen streifenförmigen Schließbereich 8 auf, der bevorzugt etwa 2 bis 10 mm breit sein kann.

Die Papierlagen 2,3 besitzen an den einander zugewandten Innenflächen eine thermoplastifizierbare Beschichtung 9 auf, die vorzugsweise aus einem Heißschmelzkleber bestehen kann. Die Beschichtung 9 kann zweckmäßig auf der gesamten Innenfläche der Papierlagen 2,3 gleichmäßig und fein verteilt aufgebracht sein. Auf der beschichteten Innenfläche der Papierlagen 2,3 können sich maschinell oder von Hand aufgebrachte Daten in Form einer Beschriftung, Zeichnung oder dergleichen befinden.

Der Schließbereich 8 des Einblattbriefes 1 ist durch einen bevorzugt vollautomatisch durchgeführten maschinellen Arbeitsgang mittels Hitze und Druck verschlossen worden, indem zunächst die thermoplastische Beschichtung 9 durch Hitzeanwendung aktiviert und unmittelbar anschließend die Papierlagen 2,3 an definierten Stellen derart fest zusammengedrückt wurden, daß eine Verprägung 10 besteht, wobei die Fasern der beiden Papierlagen 2,3 so zueinander versetzt und miteinander in Eingriff sind, daß sie einen Flechtverband 11 bilden, der einen formschlüssigen Papierlagenverbund darstellt und beim Auftrennen zwangsläufig zerreißt.

Die Eindrücke der Verprägung 10 können in einfacher Ausführung an einer einzigen Seite bzw. Außenfläche im Schließbereich 8 des Einblattbriefes 1 ausgebildet sein. In bevorzugter Ausführung kann es jedoch günstig sein, die Eindrücke der Verprägung 10 im Schließbereich 8 an beiden gegenüberliegenden Seiten bzw. Außenflächen der Papierlagen 2,3 wechselseitig auszubilden, wodurch ein besonders zuverlässiger Papierfaser-Flechtverband 11 erzielt wird. Dazu kann es zweckmäßig sein, die Verprägung 10 der Papierlagen 2,3 so auszubilden,daß sich kreuzende bzw. etwa kreuzförmig ausgeführte Bindestellen 12 im Schließbereich 8 ausgebildet sind.

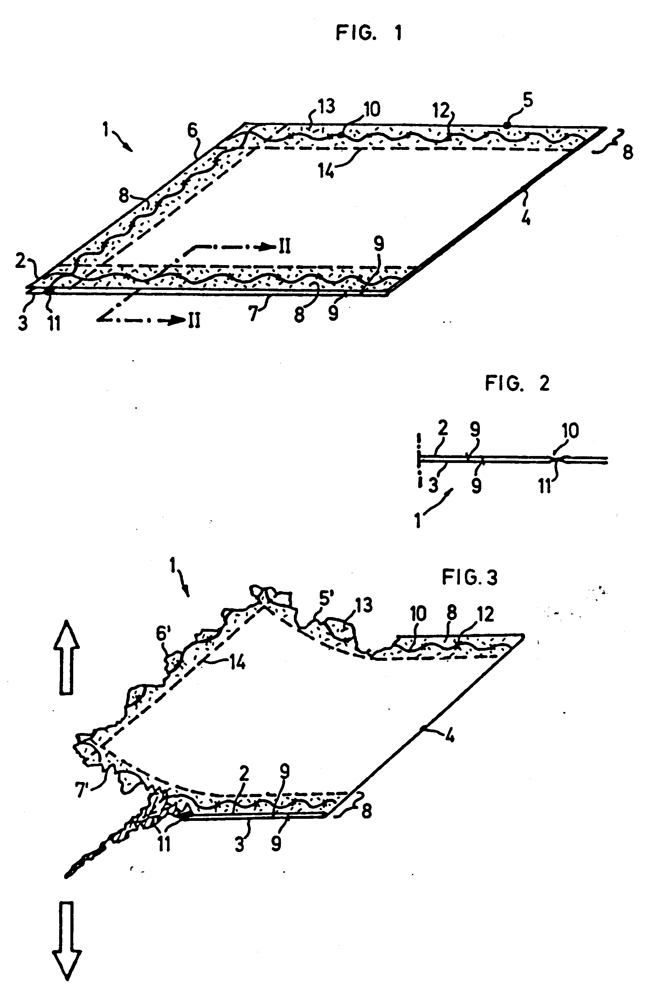

Darüber hinaus können im Schließbereich 8 des Einblattbriefes 1 Sollreißeinschnitte 13 ausgebildet sein, die sich bevorzugt im Bereich der Verprägung 10 befinden und gleichzeitig bei der Herstellung des Prägeverschlusses durch am Prägerad angeordnete kleine Schneidmesser mit ausgebildet werden. Durch die Sollreißeinschnitte 13 ist der Papierfaser-Flechtverband 11 an vorbestimmten Stellen unterbrochen, wodurch ein Versuch, den Einblattbrief 1 unbefugt zu öffnen, zusätzlich erschwert wird, da die verbundenen Papierlagen bei einem Auftrennversuch im Schließbereich 8 selbst bei äußerst vorsichtigen Öffnungsmanipulationen sofort an den Sollreißeinschnitten 13 abreißen und so beschädigt werden, daß gemäß der Darstellung in FIG. 3 ausgefranste Seitenränder 5',6',7' entstehen. Der Einblattbrief 1 kann außerdem eine Randzonenperforation 14 besitzen, die neben dem Papierfaser-Flechtverband 11 ausgebildet ist und den Schließbereich 8 in der Breite begrenzt. Beim befugten Öffnen des Einblattbriefes 1 kann der mit dem Papierfaser-Flechtverband 11 versehene Schließbereich 8 einfach entlang der Randzonenperforation 14 abgetrennt werden.

Durch die erfindungsgemäß innige Verflechtung der Fasern und der Thermoplastbeschichtung 9 im Schließbereich 8 der übereinandern liegenden Papierlagen 2,3 ist ein großer Schutz der auf der Innenseite durch Beschriftung aufgebrachten Daten des Einblattbriefes 1 gegeben. Wenn an dem mit dem Papierfaser-Flechtverband 11 verschlossenen Einblattbrief 1, z.B. bei einem Lotterielos, ein unbefugter Öffnungsversuch durchgeführt wird, reißt die Papierfaserverflechtung auf oder ab und läßt sich nicht mehr in der Originalweise zusammenfügen, so daß ein etwaiger unbefugter Öffnungsversuch eindeutig und ohne weiteres nachgewiesen werden kann, da die Faserstruktur im Schließbereich 8 dabei zwangsläufig zerstört wurde.

Nach einem weiteren erfindungsgemäßen Merkmal kann der Schließbereich bei einem zwei- oder mehrlagigen mit einer plastifizierbaren Beschichtung versehenen Papiererzeugnis, insbesondere einem Einblattbrief, Faltblatt, Formular oder dergleichen auch dadurch einfach verschlossen werden, indem der Verschließbereich anstelle von Temperaturanwendung nur durch Ultraschall gegebenenfalls in Verbindung mit Druck verschlossen wird. Demgemäß kann der Schließbereich unabhängig von der Ausbildung eines mindestens zweilagigen, mit einer thermoplastifizierbaren Beschichtung versehenen Papiererzeugnisses in sehr einfacher Weise, und ohne daß dieses Papiererzeugnis als Ganzes erwärmt zu werden braucht, und ferner mit einfachen maschinellen Einrichtungen lediglich durch Anwendung von Ultraschall, vorzugsweise in Kombination mit Druck sicher verschlossen werden. Die miteinander zu verbindenden Blätter eines Papiererzeugnisses werden vorzugsweise im Verschließbereich in einfacher Weise lediglich einer Ultraschallquelle und einem entsprechenden Schliessdruck ausgesetzt, der so groß sein kann, daß die beschriebene gewünschte Verformung der Fasern des Papiererzeugnisses im Fließbereich entsteht. Die einzelnen Papierblätter brauchen nicht mehr erwärmt zu werden, wodurch die mit der Erwärmung möglicherweise und abhängig von der Papierqualität verbundenen Nachteile, wie Verzug der Blätter, partielle Änderung der Blattfeuchte, vermieden werden. Wird der Schließbereich durch Anwendung von Druck und unter Ultraschall verschlossen, so behält das so behandelte Papier seine Planlage bei, wodurch wiederum die sich anschließenden Arbeitsgänge, beispielsweise beim Zusammentragen der einzelnen miteinander verbundenen Papiererzeugnisse vereinfacht werden.

**Patentansprüche**

1. Zwei- oder mehrlagiges, mit einer thermoplastifizierbaren Beschichtung versehenes Papiererzeugnis (1), insbesondere auf der inneren Beschichtungsseite beschrifteter Einblattbrief, Faltblatt, Formular oder dergleichen, das an mindestens einem beispielsweise am Blattrand vorgesehenen Schließbereich (8) verschlossen ist,
**dadurch gekennzeichnet,**
daß der Schließbereich (8) durch Anwendung von Druck und/ oder Ultraschall derart verschlossen ist, daß ein beim Auftrennen zerreißender Papierlagenverbund gebildet ist.

2. Papiererzeugnis nach Anspruch 1, dadurch gekennzeichnet, daß der Schließbereich (8) durch Anwendung von Druck und Temperatur verschlossen ist.

3. Papiererzeugnis nach Anspruch 1 oder 2, dadurch gekennzeichnet, daß im beschichteten Schließbereich (8) die Fasern der Papierlagen (2, 3) derart zueinander versetzt sind, daß sie einen beim Auftrennen zerreißenden Flechtverband (11) bilden.

4. Papiererzeugnis nach einem der Ansprüche 1 bis 3, dadurch gekennzeichnet, daß im Papierfaser-Flechtverband (11) des Schließbereichs (8) eine Verprägung (10) der Papierlagen (2, 3) mit Sollreißeinschnitten (13) ausgebildet ist.

5. Papiererzeugnis nach einem der Ansprüche 1 bis 4, dadurch gekennzeichnet, daß im verprägten Schließbereich (8) der Papierlagen (2, 3) bevorzugt kreuzförmig angeordnete Bindestellen (12) eingebracht sind.

6. Papiererzeugnis nach einem der Ansprüche 1 bis 5, dadurch gekennzeichnet, daß die Eindrücke der Verprägung (10) des Schließbereichs (8) der Papierlagen (2, 3) wechselseitig an gegenüberliegenden Seiten angeordnet sind.

7. Papiererzeugnis nach einem der Ansprüche 1 bis 6, dadurch gekennzeichnet, daß der Papierfaser-Flechtverband (11) des Schließbereichs (8) der Papierlagen (2, 3) neben einer Randzonenperforation (14) ausgebildet ist.

8. Papiererzeugnis nach einem der Ansprüche 1 bis 7, dadurch gekennzeichnet, daß der Papierfaser-Flechtverband (11) an mehreren Papierseitenrändern (5, 6, 7) ausgebildet ist und an einen Papierfaltrand (4) angrenzt.

## Claims

1. Paper article (1) consisting of two or more layers and provided with a thermoplasticizable coating, in particular single sheet letter, folded sheet, form or the like written on on the inner coating side, which is closed at at least one closure region (8) provided for example at the sheet edge, characterized in that the closure region (8) is closed by the application of pressure and/or ultrasound such that a paper layer seal which tears on opening is formed.

2. Paper article according to Claim 1, characterized in that the closure region (8) is closed by the application of pressure and temperature.

3. Paper article according to Claim 1 or 2, characterized in that in the coated closure region (8) the fibres of the paper layers (2, 3) are offset with respect to one another such that they form a braided seal (11) which tears on opening.

4. Paper article according to one of Claims 1 to 3, characterized in that in the paper fibre braided seal (11) of the closure region (8) there is constructed an impressed part (10) in the paper layers (2, 3) with predetermined tear incisions (13).

5. Paper article according to one of Claims 1 to 4, characterized in that in the impressed closure region (8) of the paper layers (2, 3) there are made binding points (12) arranged preferably in the shape of a cross.

6. Paper article according to one of Claims 1 to 5, characterized in that the indentations of the impressed part (10) of the closure region (8) of the paper layers (2, 3) are alternately arranged on opposite sides.

7. Paper article according to one of Claims 1 to 6, characterized in that the paper fibre braided seal (11) of the closure region (8) of the paper layers (2, 3) is constructed next to an edge zone perforation (14).

8. Paper article according to one of Claims 1 to 7, characterized in that the paper fibre braided seal (11) is constructed at a plurality of paper side edges (5, 6, 7) and adjoins a paper fold edge (4).

## Revendications

1. Article en papier (1), en particulier lettre sans enveloppe sur la face intérieure de laquelle on a écrit, feuille pliante, formulaire ou analogues, à deux ou plus couches et muni d'une enduction thermoplastifiable, article que l'on ferme en au moins une zone de fermeture (8) prévue par exemple en bordure de la feuille,
   **article caractérisé,**
   par le fait que la zone de bordure (8) est fermée, par application de la pression et/ou par les ultrasons, de façon telle qu'il se forme une liaison des couches de papier qui doit se déchirer lorsqu'on la défait.

2. Article en papier selon la revendication 1, caractérisé par le fait que la zone de fermeture (8) est fermée par application de la pression et de la température.

3. Article en papier selon la revendication 1 ou 2, caractérisé par le fait que dans la zone de fermeture (8) enduite, les fibres des couches (2, 3) de papier sont déplacées les unes par rapport aux autres de façon telle qu'elles forment une liaison par entrelacement (11) qui doit se déchirer lorsqu'on la défait.

4. Article en papier selon l'une des revendications 1 à 3, caractérisé par le fait que dans la liaison (11) par entrelacement des fibres de papier de la zone de fermeture (8) se forme un matriçage (10) des couches de papier (2, 3) avec des découpes (13) de déchirure prescrite.

5. Article en papier selon l'une des revendications 1 à 4, caractérisé par le fait que dans la zone de fermeture (8), matricée, des couches de papier (2, 3), sont rapportées des positions de liaison (12) disposées de préférence en croix.

6. Article en papier selon l'une des revendications 1 à 5, caractérisé par le fait que les empreintes du matriçage (10) de la zone de fermeture (8) des couches de papier (2, 3) sont alternativement disposées des côtés opposés.

7. Article en papier selon l'une des revendications 1 à 6, caractérisé par le fait que la liaison (11) par entrelacement des fibres de papier de la zone de fermeture (8) des couches de papier (2, 3) est formée à côté d'une perforation (14) de zone de bordure.

8. Article en papier selon l'une des revendications 1 à 7, caractérisé par le fait que la liaison (11) par entrelacement des fibres de papier est formée sur plusieurs bords latéraux (5, 6, 7) du papier et limite un bord (4) de pliage du papier.

FIG. 1

FIG. 2

FIG. 3